# EUROPEAN PATENT APPLICATION

(11) **EP 4 653 216 A1**
(43) Date of publication of application: **26.11.2025**
(21) Application number: 24177660.8
(22) Date of filing: 23.05.2024
(51) Int. Cl.: B60K 1/04

(54) **BATTERY MOUNTING PLATFORM FOR AN ELECTRIC VEHICLE**

(71) Applicant: VOLVO TRUCK CORPORATION, 405 08 Göteborg (SE)
(72) Inventor: MOCANOSKI, Dragan, 434 91 KUNGSBACKA (SE); GUIDEZ, Luis, 421 53 VÄSTRA FRÖLUNDA (SE)
(74) Representative: Kransell & Wennborg KB

(57) **Abstract**

A battery mounting platform (200) for a plurality of battery packs for a heavy-duty electric vehicle is provided. The platform includes a plate (210) mountable suspended from a chassis frame (100) of the vehicle using one or more mounting brackets (220). The plate 210 provides a battery mounting platform for a plurality of battery packs for powering an electric traction of the vehicle. First battery packs are mountable suspended from a bottom side (212) of the plate, and second battery packs are mountable on a top side (214) of the plate. The platform may optionally include also a second plate below the first battery packs, such that the first battery packs are mounted to a top side of the second plate. A corresponding heavy-duty electric vehicle including the chassis frame, the plate and the first and second battery packs is also provided.

## Description

### TECHNICAL FIELD

The disclosure relates generally to heavy-duty electric vehicles. In particular aspects, the disclosure relates to a platform for mounting of a plurality of battery packs for such a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Contemporary battery technology does not offer the same volumetric or gravimetric energy density as fuel-based alternatives. Installation of sufficient amounts of energy storage (usually in form of multiple battery packs) in heavy-duty electric vehicles is therefore challenging, as both the weight and volume available for such installation are often limited. In addition, it is also desirable that the battery packs are accessible and/or removable also after being installed in the vehicle, to facilitate things like service and regular maintenance.

The present disclosure aims at providing a solution for mounting of battery packs to a heavy-duty electric vehicle, that increases the energy storage density and facilitates service and maintenance.

### SUMMARY

According to a first aspect of the present disclosure, there is provided a heavy-duty electric vehicle. The vehicle includes a chassis frame, a plate suspended from the chassis frame using one or more mounting brackets, and a plurality of battery packs for powering an electric traction of the vehicle. The plurality of battery packs includes first battery packs mounted suspended from a bottom side of the plate as well as second battery packs mounted on a top side of the plate.

The first aspect of the disclosure may seek to solve the problem of how to increase energy storage density in a heavy-duty electric vehicle, while also allowing for easy access to the battery packs for service and maintenance purposes. A technical benefit may include that by using a plate instead of e.g. individual mounting brackets between each battery pack and the chassis frame, the overall complexity (such as number of required parts, issues with individual tolerances, etc.), weight and cost are reduced, while volume-utilization is increased. In particular, the ability to mount battery packs on both the top and bottom side of the plate increases the number of battery packs that can be installed in the vehicle. The envisaged solution also allows for the plate and the battery pack to work together to increase the overall structural stability of the solution, allowing e.g. the housings of the battery packs to be more lightweight (using e.g. sheet metal instead of more heavy castings). As will also be described in more detail later herein, mounting of battery packs on both sides of the plate may shift the vertical center of gravity of the installation to be more aligned with the plate and/or chassis frame, which may increase structural integrity of the installation during a crash and thereby improve also overall vehicle safety and allow for simpler crash protection designs.

Optionally in some examples, including in at least one preferred example, the plate may be mounted to each of a pair of longitudinal beams of the chassis frame using the one or more mounting brackets. A technical benefit may include that simple mounting brackets can be used, similar to e.g. mounting brackets used for a fifth-wheel platform, which may further reduce the weight of the installation.

Optionally in some examples, including in at least one preferred example, at least one of the second battery packs may be mounted between the longitudinal beams. A technical benefit may include that the space available between the beams may thus be utilized for electrical energy storage, leading to a further increase in energy storage density. As will be explained in more detail later herein, the plate and overall construction of the solution also allows for such a battery pack mounted between the beams of the chassis frame to be accessible even if the vehicle is e.g. a box truck with a cargo-area on top of the chassis frame.

Optionally in some examples, including in at least one preferred example, at least one of the second battery packs may be mounted on a first latera side of the chassis frame and at least another one of the second battery packs may be mounted on an opposite, second lateral side of the chassis frame. A technical benefit may include that such a symmetric arrangement of the battery packs on both sides of the chassis frame may increase energy storage density, and e.g. increase handling and balance of the vehicle.

Optionally in some examples, including in at least one preferred example, the plate may be made of steel. A thickness of the plate may be between 5 and 25 millimeters, preferably between 10 and 15 millimeters. In general, it is envisaged that the plate may not necessarily be very thick, as the structure of the battery packs will work in combination with the plate to create an overall strong structure. A technical benefit may include that by keeping the plate thin enough to provide some flexing, the plate can then move with the chassis as the chassis deforms due to being loaded, the vehicle travelling on uneven ground, and similar, and it is thus avoided to mount a more structurally rigid structure to a more structurally flexible structure.

Optionally in some examples, including in at least one preferred example, at least some of the first and second battery packs may be provided with brackets for mounting to the plate. A technical benefit may include that such brackets may help to provide structural integrity both to the battery pack and also to the plate itself, thereby reducing the structural requirements of e.g. the battery pack housings. In addition, such brackets may be formed such that they extend somewhat outside of the battery pack, allowing for more easy access to e.g. screws, bolts, nuts, and similar, used to fix the bracket and battery pack to the plate.

Optionally in some examples, including in at least one preferred example, the plate may be mounted at a longitudinal center of the chassis frame. A technical benefit may include that torsional deformations of the chassis frame are minimal at the center of the chassis frame, which reduces the impact of such deformations on the plate.

Optionally in some examples, including in at least one preferred example, the plate may be provided with cutouts at the chassis frame, to account for torsional deformations of the chassis frame. A technical benefit may include that this may further reduce the impact of such torsional deformations on the plate.

Optionally in some examples, including in at least one preferred example, the plate may be provided with such cutouts at each of the longitudinal beams at a front side of the plate (i.e. the side of the plate facing towards the front of the vehicle) and at each of the longitudinal beams at a back side of the plate (i.e. the side of the plate facing towards the rear of the vehicle). A technical benefit may include that such an arrangement of the cutouts may optimize the reduction of torsional deformation impact from the chassis frame on the plate.

Optionally in some examples, including in at least one preferred example, the first and second battery packs may be individually removable from the plate. Phrased differently, at least some battery packs of the first and second battery packs mounted vertically on top of/below each other may be individually removable from the plate. A technical benefit may include that this allows for easier access and removal (or installation) of the battery packs, e.g. as part of a service or maintenance routine. If the vehicle is e.g. a box truck or have any other structure on top of the chassis frame in the area where the battery packs are installed, it is envisaged that the plate allows the battery packs on top to be slid out after being released from the plate, e.g. by sliding towards the front or rear of the vehicle and/or to the side of the vehicle.

Optionally in some examples, including in at least one preferred example, a combined center of gravity of the first and second battery packs may align with the plate and/or chassis frame in a vertical direction of the chassis frame (i.e. a top-down direction). As envisaged herein, "align" may not necessarily mean perfect alignment, but at least the ability to move the combined center of gravity closer to the plate and/or chassis frame than what would be possible if e.g. not using the plate and/or only mounting battery packs on the top or bottom of the plate. A technical benefit may include that the installation is thus made safer in terms of a vehicle crash, or in particular in case the vehicle is hit by another vehicle or structure on its side. Improving the alignment of the center of gravity of the battery packs/plate with the chassis frame reduces the risks of the installation twisting and even being broken off the chassis frame in case of such an accident, which improves safety for both the driver and nearby objects and persons. The ability to better align the combined center of gravity of the battery packs in such a way follows from the use of the envisaged plate, and the envisaged mounting of battery packs both on top of and from the bottom of the plate.

Optionally in some examples, including in at least one preferred example, the first battery packs may be provided with screws or bolts for mounting the first battery packs to the plate, and the plate may include holes for receiving the screws or bolts of the first battery packs, for guiding each of the first battery packs during the mounting of the first battery packs to the plate. A technical benefit may include that it becomes easier to install the first battery packs to the plate, as the battery packs will be sufficiently and correctly aligned with the plate once the screws or bolts are positioned in the holes of the plate. The use of screws or bolts also allows for easy mounting and dismounting of the battery packs from the plate using conventional tools.

Optionally in some examples, including in at least one preferred example, the plate may be provided with bolts at the top side for mounting the second battery packs to the plate. The second battery packs may be provided with holes for receiving the bolts of the plate, for guiding each of the second battery packs during the mounting of the second battery packs to the plate. A technical benefit may be the same as that of the screws or bolts of the first battery packs, namely that the mounting or dismounting of the second battery packs to the plate can be made more easier, and that installation and/or removal of the second battery packs can be made using conventional tools.

Optionally in some examples, including in at least one preferred example, the first battery packs may be oriented along a transverse direction of the chassis frame. A technical benefit may include that more rigidity may thus be provided to the overall installation, and/or in that e.g. access to various connectors for electricity and/or cooling fluid may be easier.

Optionally in some examples, including in at least one preferred example, the first battery packs may be oriented along a longitudinal direction of the chassis frame. A technical benefit may include that the first battery packs can then be oriented in a same direction as the second battery packs on top of the plate. This may allow to e.g. use battery packs where connectors for cooling fluid are arranged on a front side of the battery packs (e.g. facing towards the front of the vehicle), and where electrical connectors for power are arranged on a back side of the battery packs (e.g. facing towards the rear of the vehicle), thereby allowing to separate cooling liquid from electrical connectors, which may improve safety and also allow for a more convenient routing of e.g. cooling hoses/tubes to the front (where e.g. a fan-cooled heat-exchanger is often mounted) and electrical cables to the rear of the vehicle (where the electrical traction and/or high-voltage inverter, etc., are often provided). Such orientation of the battery packs also avoids the need to e.g. route connectors for cooling liquid and/or electricity on a lateral side (e.g. facing to the right or left of the vehicle). In addition, such connectors may be better protected from impact during a crash, in particular from side-impact forces.

Optionally in some examples, including in at least one preferred example, the first and second battery packs may include cooling fluid connectors on a front side in the longitudinal direction and electrical connectors on an opposite back side in the longitudinal direction, or vice versa. A technical benefit may be that just described above, namely the separation of cooling liquid and electricity, and/or the more easy routing of cooling conductors and electrical conductors on opposite sides of the battery packs.

Optionally in some examples, including in at least one preferred example, the first and/or second battery packs may include multiple groups of flat packs stacked on top of each other and then mounted to the plate. A technical benefit may be that such flat packs are often found in smaller vehicles, such as automobiles, and being able to use such (smaller) flat packs also for heavy-duty vehicles such as trucks may improve production efficient and cost, as a single type of battery pack may be used to power both smaller and larger vehicles.

Optionally in some examples, including in at least one preferred example, the vehicle may further include one or more damping elements provided between the chassis frame and the one or more mounting brackets. A technical benefit may include that vibrations from the chassis frame may thus be prevented from entering into the mounting brackets.

Optionally in some examples, including in at least one preferred example, the vehicle may further include one or more damping elements provided between the one or more mounting brackets and the plate. A technical benefit may include that vibrations in the mounting brackets may thus be prevented from entering into the plate.

Optionally in some examples, including in at least one preferred example, the vehicle may further include one or more damping elements provided between the plate and at least some of the first and second battery packs. A technical benefit may include that vibrations in the plate may thus be prevented from entering into the battery pack(s).

Optionally in some examples, including in at least one preferred example, the vehicle may further include an additional, second plate below the first battery packs, wherein the first battery packs are mounted to a top side of the second plate. The first battery packs may for example be mounted to the additional plate using brackets, similar to the mounting of the second battery packs to the top side of the (first) plate. A technical benefit may include that the first and second plates may work together to create an overall more structurally strong installation, and e.g. that the additional second plate may provide for an easier installation/removal process of the first battery packs, as will be described in more detail later herein.

According to a second aspect, there is provided a battery mounting platform for a heavy-duty electric vehicle, including the plate as described herein with reference to the first aspect, wherein the plate is mountable suspended from a chassis frame of the vehicle using one or more mounting brackets.

According to a third aspect, there is provided An energy storage system for a heavy-duty electric vehicle, including the battery mounting platform of the second aspect, and a plurality of battery packs for powering an electric traction of the vehicle, including first battery packs mounted to a first side of the plate as well as second battery packs mounted on a second side of the plate.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** schematically illustrates an example conventional chassis frame of a heavy-duty vehicle.
**FIG. 2** schematically illustrates an example plate and mounting bracket(s) for mounting of battery packs to the chassis frame of an electric heavy-duty vehicle as envisaged herein, according to one or more examples of the present disclosure.
**FIGS. 3A, 3B and 3C** schematically illustrate various examples of mounting of battery packs on both sides of the plate as envisaged herein, according to one or more examples of the present disclosure.
**FIG. 3D** schematically illustrates an additional example of mounting of battery packs on both sides of the plate, including also an additional, second plate below the first battery packs, according to one or more examples of the present disclosure.
**FIGS. 4A, 4B** **and** **4C** schematically illustrate various example aspects of mounting battery packs to a plate using brackets, according to one or more examples of the present disclosure.
**FIG. 5** schematically illustrates examples of damping elements provided as part of the envisaged battery pack installation platform, according to one or more examples of the present disclosure.
**FIG. 6** schematically illustrates an example heavy-duty electric vehicle including the envisaged plate(s) for mounting of battery packs, according to one or more examples of the present disclosure.
**FIGS. 7A, 7B and 7C** schematically illustrate an example process and result of installing battery packs to the chassis frame of the vehicle using the additional, second plate, according to one or more examples of the present disclosure.

### DETAILED DESCRIPTION

The detailed description set forth below provides information and examples of the disclosed technology with sufficient detail to enable those skilled in the art to practice the disclosure.

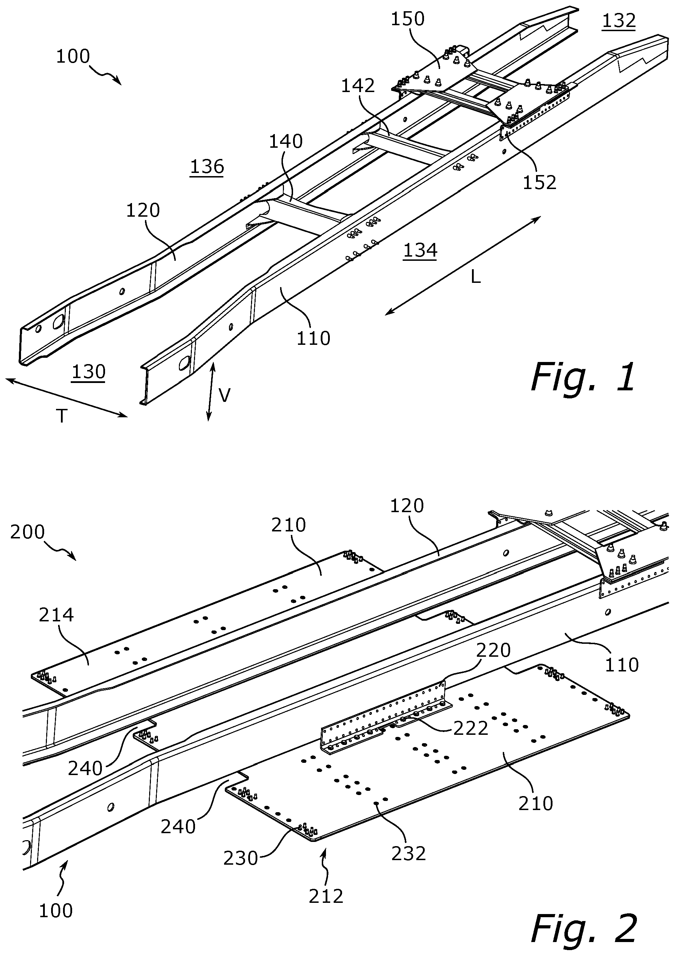

**FIG. 1** schematically illustrates a chassis frame 100 of a heavy-duty vehicle. The chassis frame 100 includes two longitudinal beams 110 and 120, i.e. a left beam 110 and a right beam 120 if seen towards a front side/end 130 of the chassis frame 100. The chassis frame 100 has a longitudinal direction (or axis) L extending between the front side 130 and an opposite back/rear side/end 132 of the chassis frame 100, a transverse direction (or axis) T extending perpendicular to the longitudinal direction L (between a left lateral side 134 and a right lateral side 136 of the chassis frame 100), as well as a vertical direction (or axis) V extending perpendicular to both the longitudinal direction L and the transverse direction T of the chassis frame 100. The chassis frame 100 may be provided with one or more cross bars/beams 140 and 142 extending between the longitudinal beams 110 and 120 in the transverse direction T. Whether any of the cross bars 140 and 142 are provided may for example be governed by whether the chassis frame 100 is for a vehicle supposed to be driven on flat, even ground, or whether e.g. the vehicle is an off-road vehicle supposed to be driven in terrain that requires further stabilization of the chassis frame 100. The chassis frame 100 may also, in some examples, be further equipped with a platform 150 for mounting of a so-called fifth-wheel connection, if the vehicle to which the chassis frame 100 belongs is e.g. supposed to tow a semitrailer or similar. The fifth-wheel platform 150 may be mounted to the (longitudinal beams 110 and 120) of the chassis frame 100 using mounting brackets 152.

With all components of the vehicle installed (not shown in FIG. 1), there may not be much space left for installation of battery packs, which thus poses a challenge when trying to electrify vehicles with chassis frames such as the chassis frame 100. For example, the space around the chassis frame 100 at its back/rear end 132 will likely be occupied by the suspension of the rear wheel axle or axles (in case of a boogie), while the space at the front of the chassis frame 100 will likely be occupied by e.g. the suspension of the front axle, the steering, the driver cabin, and similar. Other components such as storage boxes (for snow chains and/or tooling), electrical wire harnesses, and similar will also occupy some of the available space around/in the chassis frame 100, with the result that there may be very limited space available for installation of battery packs required to provide electrical power to the traction of the vehicle. Conventional solutions for installation of battery packs often includes each battery pack being individually mounted to the chassis frame 100 using individual mounting brackets, which introduces a lot of "overhead" in terms of material and weight that may not be used to store electric energy. Other conventional solutions include to first mount all battery packs together in a battery pack "matrix", and to then mount the whole matrix to the chassis frame 100. In case a particular battery pack requires service and/or maintenance, the whole matrix is often needed to be removed from the chassis frame 100 in order to provide access to the particular battery pack.

How the solution as envisaged herein improves upon such a situation will now be described in detail with reference first to FIG. 2.

**FIG. 2** schematically illustrates an example of an envisaged improved platform solution 200 for mounting/installation of battery packs in a heavy-duty electric vehicle. As part of the solution 200, there is provided a plate 210 that is suspended from the chassis frame 100 using one or more mounting brackets 220. The mounting brackets 220 may for example be similar to those used to mount the fifth-wheel platform 150 to the chassis frame 100 as shown in FIG. 1. There may for example be one mounting bracket 220 arranged to mount the plate 210 to the left longitudinal beam 110 of the chassis frame 100, and another mounting bracket 220 (not shown) arranged to mount the plate 210 to the right longitudinal beam 120 of the chassis frame 100. In other examples, there may be multiple mounting brackets mounting the plate 210 to the left beam 110 and multiple mounting brackets mounting plate 210 to the right beam 120, or e.g. a single mounting bracket mounting the plate 210 to both beams 110 and 120, and similar. The mounting bracket(s) 220 may be configured to mount the plate 210 to the outside of the respective beams 110 and 120, or the mounting bracket(s) 220 may be configured to mount the plate 210 to the inside of the respective beams 110 and 120, or the mounting bracket(s) 220 may be configured to mount the plate 210 to both inside and outside sides of the beams 110 and 120, and similar. The mounting bracket(s) 220 may for example be L-shaped, U-shaped, or have any other suitable shape allowing to mount the plate 210 to the (longitudinal beams 110 and 120 of the) chassis frame 100. The mounting bracket(s) 220 may for example be secured to the plate 210 using a plurality of screws, bolts or nuts 222 and similar. The mounting bracket(s) 220 may for example be secured to the respective beam 110 and 120 of the chassis frame 110 using screws, bolts, nuts, rivets, welding, and similar.

The plate 210 is configured such that it may receive battery packs both on a bottom side 212 and on a top side 214 of the plate 210. For this purpose, the plate 210 may for example be provided with a plurality of screws, bolts or nuts 230 and/or a plurality of holes 232, that may be configured to match with corresponding holes and screws, bolts or nuts of e.g. brackets of the respective battery packs that are to be mounted on each side 212 and 214 of the plate 210.

The plate 210 is preferably mounted towards or at a longitudinal center of the chassis frame 100, as the effect of torsional deformations of the chassis frame 110 when e.g. driving the vehicle are likely to be reduced at that point. To further reduce the effect of such torsional deformations of the chassis frame 100, the plate may optionally be provided with one or more cutouts 240. The cutout(s) 240 may for example be located at the respective longitudinal beams 110 and 120 of the chassis frame 100, such as at a front end of the plate 210 towards the front end 130 of the chassis frame 100 and/or at a back end of the plate 210 towards the rear end 132 of the chassis frame 100. As generally used herein, an "end" of something is decided by its location/proximity in relation to something else, while a "side" of something is decided by in what direction its surface faces. Thus, a "front end" of the plate 210 is not referring only to its "front side", but to parts of the plate 210 arranged closer to the front end 130 of the chassis frame 100 than parts of the plate 210 arranged closer to the rear end 132 of the chassis frame 100, and vice versa for the "back end" of the plate 210.

The plate 210 may for example have a thickness between 5 and 25 millimeters, such as between 10 and 15 millimeters, such as e.g. 10 millimeters. Other thicknesses of the plate is of course also envisaged, but it is noted that the plate 210 does not necessarily need to be very thick for multiple reasons. First, the addition of the battery packs will help to provide structural strength/rigidity and, second, the chassis frame 100 is likely to bend/flex/deform when driving the vehicle and it may be undesirable to fix a structurally very rigid entity to a less rigid entity. The weight of the plate 210 may thus be low and adding of further weight to the vehicle is thus avoided. The plate 210 may for example have a rectangular cuboid shape, or any other suitable shape where its extension in the horizontal plane is much larger than its extension in the vertical plane. Preferably, the plate 210 is dimensioned and arranged such that it extends laterally on both sides of the chassis frame 100, and made sufficiently wide (i.e. in the transverse direction T of the chassis frame 100) to accept at least one battery pack on each side of the chassis frame 100. The length (i.e. in the longitudinal direction L of the chassis frame 100) of the plate 210 may be decided based on e.g. a length of the battery packs that are to be mounted on top (and/or at the bottom) of the plate 210, and be adapted to maximally utilize the available space provided below the chassis frame 100 for mounting of battery packs.

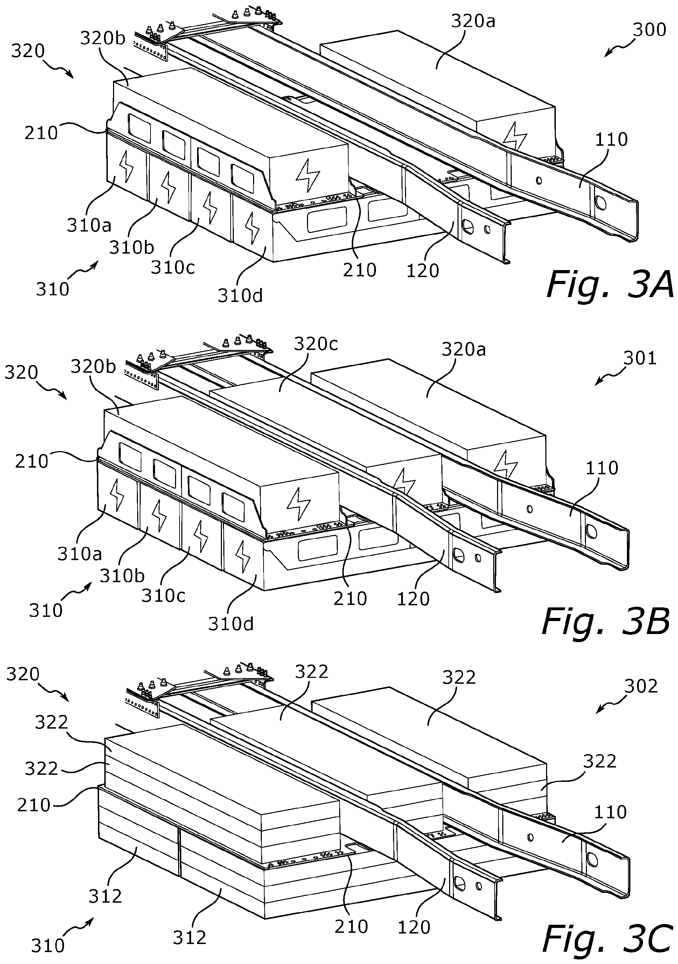

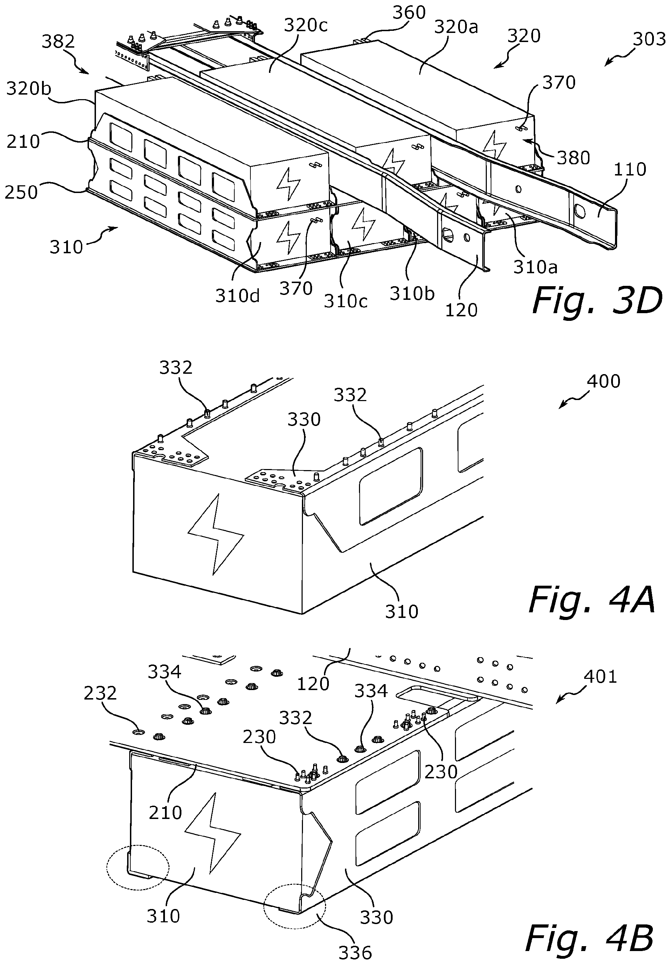

How battery packs are envisaged to be mounted to the plate 210 will now be described in more detail with reference also to FIGS. 3A, 3B, 3C and 3D.

**FIG. 3A** schematically illustrates an example installation 300 as envisaged herein. In the installation 300, a plurality of first battery packs 310a, 310b, 310c and 310d (jointly referred to as first battery packs 310) are mounted suspended from the bottom side 212 of the plate 210. In addition, a plurality of second battery packs 320a and 320b (jointly referred to as second battery packs 320) are mounted to the top side 214 of the plate 210, on the outer sides of the longitudinal beams 110 and 120, respectively (e.g. on both the left lateral side 134 and the right lateral side 136 of the chassis frame 100). Each of the first battery packs 310 may for example be referred to as a "battery under frame" (BUF), while each of the second battery packs 320 may for example be referred to as a "battery outside frame" (BOF). In this particular example, the battery packs 310 and 320 are all of same or similar dimension/type, which may be beneficial in that only a single type of battery pack is needed in the vehicle. In this particular example, the first battery packs 310 are each oriented along the transverse direction T of the chassis frame 100, while each of the second battery packs 320 are oriented along the longitudinal direction of the chassis frame 100. Orienting the first and second battery packs cross-wise may have the benefit of added structural strength/rigidity to the overall installation 300.

**FIG. 3B** schematically illustrates another example installation 301 as envisaged herein. In the installation 301, everything is the same as in the installation 300 except that an additional second battery pack 320c is provided on the top side 214 of the plate 210, and arranged in a space formed between the longitudinal beams 110 and 120 of the chassis frame 100. The battery pack 320c may for example be referred to as a "battery inside frame" (BIF). Placing the battery pack 320c within the space between the beams 110 and 120 may further increase the energy storage density of the installation 301 compared to the installation 300.

**FIG. 3C** schematically illustrates another example installation 302 as envisaged herein, wherein each "battery pack" is formed by a group of multiple flat packs 312 and 322 that are stacked on top of each other to have at least approximately the same overall dimensions as the single battery packs shown in e.g. FIGS. 3A and 3B. In FIG. 3C, the lower battery packs 312 are larger (i.e. wider) than the upper battery packs 322. In other examples, it may of course be envisaged that the lower battery packs 312 have a same or similar dimension/type as that of the upper battery packs 322, in which case it may for example be possible to fit/mount four stacks of flat packs 312 below the plate 210 instead of two. It may further be optional to place flat packs in between the two beams 110 and 120 on top of the plate 210, i.e. the installation 300 shown in FIG. 3A may also be recreated using stacks of flatpacks instead of only single battery packs 320. A combination of the two solutions, e.g. a combination with both single battery packs and stacks of flat packs is of course also possible. A benefit of using flat packs is that such flat packs may be the ones used in smaller vehicles such as electric automobiles, and in that only a single type of (flat) battery pack may then be produced and used both in smaller (automobiles) and larger (heavy-duty) vehicles, which may reduce production costs as larger production volumes of a same entity often drives costs down.

**FIG. 3D** schematically illustrates another example installation 303 as envisaged herein. FIG. 3D serves to illustrate two additional concepts of the present disclosure, that may be combined, or each used on their own.

The first such additional concept includes providing an additional, second plate 250 below the first battery packs 310 (such as battery packs 310a-d), where the first battery packs 310 are mounted to a top side of the second plate 250. The second plate 250 may for example provide additional structural strength/rigidity to the overall installation 303, but may also facilitate the installation/removal of the first battery packs 310. The second plate 250 may also serve as a mounting platform for e.g. one or more crash protection devices (such as side-impact barriers), which could then be mounted to the second plate 250 instead of to e.g. the battery packs themselves, thereby further improving crash safety.

The second such additional concept includes orienting each of the first battery packs 310 along the longitudinal direction L of the chassis frame 100, such that the first and second battery packs 310 and 320 are all oriented in the same longitudinal direction L. This may be advantageous in that a same type of battery pack may be used for both the first and second battery packs 310 and 320, and in particular in that connectors 370 for cooling fluid and connectors 360 for electricity may be arranged on opposite sides of the battery packs in the longitudinal direction. For example, the connectors 370 for cooling fluid may be arranged on a front side 380 of the battery packs, and the connectors 360 for electricity may be arranged on an opposite back side 382 of the battery packs. This may be advantageous in that the part of the vehicle responsible for cooling the cooling fluid to/from the battery packs is often located towards the front of the vehicle, to e.g. utilize air flow for cooling, while the part of the vehicle responsible for electrically propelling the vehicle (such as one or more electrical machines, high-voltage inverters, and similar) are often located towards the rear of the vehicle. Routing of conductors for cooling fluid and electricity is thus made more convenient as no routing of conductors are e.g. needed on the lateral sides (e.g. left and right) of the battery packs and similar. This also has the advantage that separation of cooling fluid and electricity is obtained, which improves safety as it reduces the risk of e.g. cooling fluid coming into contact with conductors/connectors under high voltage. In other examples, it may of course be the other way around, such that the connectors 370 for cooling fluid are instead provided at the back side 382 and the connectors 360 for electricity are provided at the front side 380 of the battery packs 310 and 320.

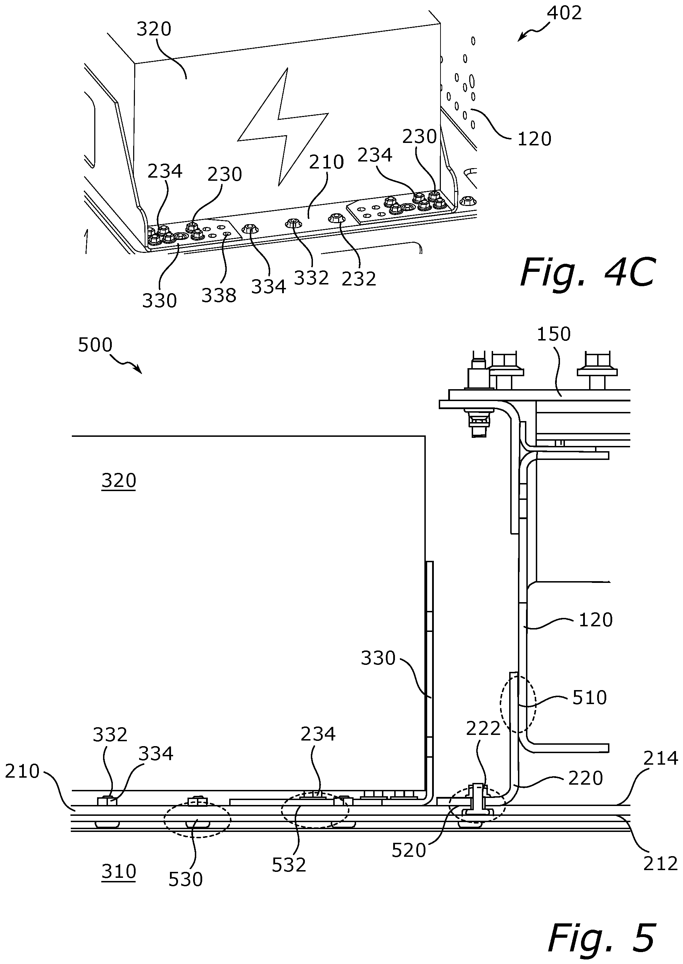

Various envisaged ways of mounting the battery packs to the plate(s) 210 (and 250) will now be described in more detail with reference also to FIGS. 4A, 4B and 4C.

**FIG. 4A** schematically illustrates an example arrangement 400 of a (first) battery pack 310 as envisaged herein, wherein the battery pack 310 is provided with one or more mounting brackets 330. As the plate 210 to which the battery pack 310 is mounted provides structural rigidity and strength, the mounting bracket(s) 330 can be made more lightweight than if the mounting bracket 330 was to mount the battery pack 310 directly to the chassis frame 100 of the vehicle. For example, the battery pack 310 may be provided with two mounting brackets 330 (one on each side), or there may be provided only a single mounting bracket 330 for the battery pack 310. As envisaged herein, the one or more mounting brackets 330 can be provided as additional/extra components, or be integrated and form part of the battery pack 310 itself. Each mounting bracket 330 may be provided with screws or bolts 332, such as e.g. press screws, that may fit inside the plurality of holes 232 in the plate 210 as illustrated in FIG. 2. In this particular example, the mounting bracket 330 does not extend outside the battery pack 310 in the longitudinal direction of the battery pack, such that access to the screws/bolts 332 once the battery pack 310 is mounted to the plate is only available from above the plate 210. In other examples, it is envisaged that the mounting bracket 330 may extend outside the battery pack 310 in the longitudinal direction of the battery pack, such that access to the screws/bolts 332 may be made possible also from e.g. below the plate, which may further ease the process of mounting or dismounting the battery pack 310 to or from the plate 210.

**FIG. 4B** schematically illustrates an example arrangement 401 of the (first) battery pack 310 being mounted (using the one or more mounting brackets 330) to the plate 210, such that the battery pack 310 is suspended below the plate 210. The screws/bolts 332 of the battery pack 310/mounting bracket 330 have been inserted through the holes 232 of the plate 210, and fastened using suitable nuts 334. In this example, the mounting bracket 330 is suitable for also mounting the battery pack 310 to the top side of the second plate 250, if such a plate 250 is included as part of the installation. Although not explicitly shown in FIG. 4B, this may include e.g. one or more screws and/or bolts in for example regions 336 of the bracket 330, such that these screws and/or bolts may be inserted into corresponding holes of the second plate 250 and fastened to the second plate using e.g. corresponding nuts. In other examples, it is envisaged that the bracket 330 may extend outside the battery pack e.g. in the longitudinal direction of the battery pack, and for example be provided with holes to receive corresponding screws and/or bolts of the second plate 250. In any way, the combination of extending screws and/or bolts in one part (e.g. battery pack) and corresponding holes in the other part (e.g. plate) allows for guidance of the battery pack and/or plate while joining the two together, thus facilitating the mounting or dismounting process.

**FIG. 4C** schematically illustrates an example arrangement 402 of a (second) battery pack 320, that is also provided with (or includes) a mounting bracket 330 for mounting the battery pack 320 to the plate 210. Here, the mounting bracket 330 is provided with holes 338 arranged to receive the screws and/or bolts 230 of the plate 210, such that the bracket 330 and battery pack 320 can be secured to the plate 210 using suitable nuts 234 or similar. In this example, it is seen how the bracket 330 may be such that it extends outside of the battery pack 230 in the longitudinal direction of the latter (which may or may not correspond to the longitudinal direction L of the chassis frame 100), such that access to the fastening means for securing the battery pack 320 to the plate 210 is more available. In FIG. 4C, it can also be seen that such a mounting bracket 330 further allows access to e.g. the screws and/or bolts 332 (and corresponding nuts 334) used to secure one or more of the first battery packs through the holes 232 of the plate 210, which enables to e.g. mount or dismount the first battery packs below the plate 210 without first having to remove the second battery packs 320 from on top of the plate 210.

In general, the envisaged solution including the plate 210 facilitates the mounting or dismounting of individual battery packs to/from the vehicle. In particular, the envisaged solution enables to individually install/remove at least some of the first and second battery packs without first having to remove one or more other battery packs. For example, to remove a BOF such as 320a and 320b, it is possible to just remove the nuts 234 and then either lift the battery pack up fully, or to e.g. lift the battery pack up slightly and then remove the battery side to the side (i.e. to the left or right). To remove a BUF such as 310a to 3 10d, it may first be necessary to remove the BOF battery packs 320a and 320b such that access to all fastening means (such as screws/bolts 332 and nuts 334) is made available. The BUF battery packs may then be unsecured and lowered from the plate 210. To remove the BIF such as 320c, it may be necessary to first remove the BOF battery packs, and then the whole platform (including the plate 210) can be released from the chassis frame 100 and lowered together, which may facilitate service and maintenance of the battery packs. If the vehicle is e.g. a box truck or has anything else on top of the chassis frame 100, the envisaged solution still allows access to all battery packs. For example, the BIF battery pack may still be unsecured as access to e.g. the screws/bolts 332 and nuts 334 is still available, and then be slid out in the longitudinal direction L of the chassis frame 100. If not possible to perform such sliding due to space restrictions, the BIF battery pack may instead be lowered together with the plate 210 and the BUF battery packs. Consequently, the envisaged solution is such that it enables to remove at least some of the top and bottom (e.g. second and first) battery packs individually, and also enables to remove at least some of the battery packs (such as the first battery packs) simultaneously by releasing the plate 210 from the chassis frame 100.

Although having been illustrated using a particular type of battery packs and a particular dimension, the plate 210 may of course be adapted to fit the battery packs that are available, and it also allows for combinations of battery packs of different dimensions and/or types, if desirable. The envisaged solution is thus highly flexible. The height of the platform may be changed by altering the height/dimensions of e.g. the mounting bracket(s) 220 used to secure the plate 210 to the chassis frame 100, and the positioning of the plate 210 relative the chassis frame 100 is also easily adjusted by e.g. moving the mounting brackets 220 or similar.

**FIG. 5** schematically illustrates further examples of how an installation 500 as envisaged herein may include one or more damping elements in order to avoid vibrations being propagated into the battery packs. In one example, one or more damping elements (such as rubber bushings, or similar) may be provided in an area 510 between the chassis frame (e.g. between the longitudinal beams, such as the right longitudinal beam 120) and the mounting bracket(s) 220 used to secure the plate 210 to the chassis frame 100, and thereby prevent (or reduce the effects of) vibrations propagating from the chassis frame 100 to the mounting bracket(s) 220. In one example, one or more damping elements may instead, or in addition, be provided in an area 520 between the mounting bracket(s) 220 and the plate 210, and thereby prevent (or reduce the effects of) vibrations propagating from the mounting bracket(s) 220 to the plate 210. In one example, one or more damping elements may instead, or in addition, be provided in an area 530 between the plate 210 and the (mounting bracket(s) 330 of the) first battery packs 310, and/or in an area 532 between the plate 210 and the (mounting bracket(s) 330 of the) second battery packs 320, thereby preventing (or reducing the effects of) vibrations propagating from the plate 210 to one or more of the first and second battery packs 310 and 320. In general, one or more damping elements may thus be provided to overall prevent (or reduce the effect of) vibrations propagating from the chassis frame 100 to the first and/or second battery packs 310 and 320, which may serve to reduce unnecessary wear of the battery packs 310 and/or 320 themselves and/or the various structures used to secure the battery packs 310 and/or 320 to the chassis frame 100 and vehicle.

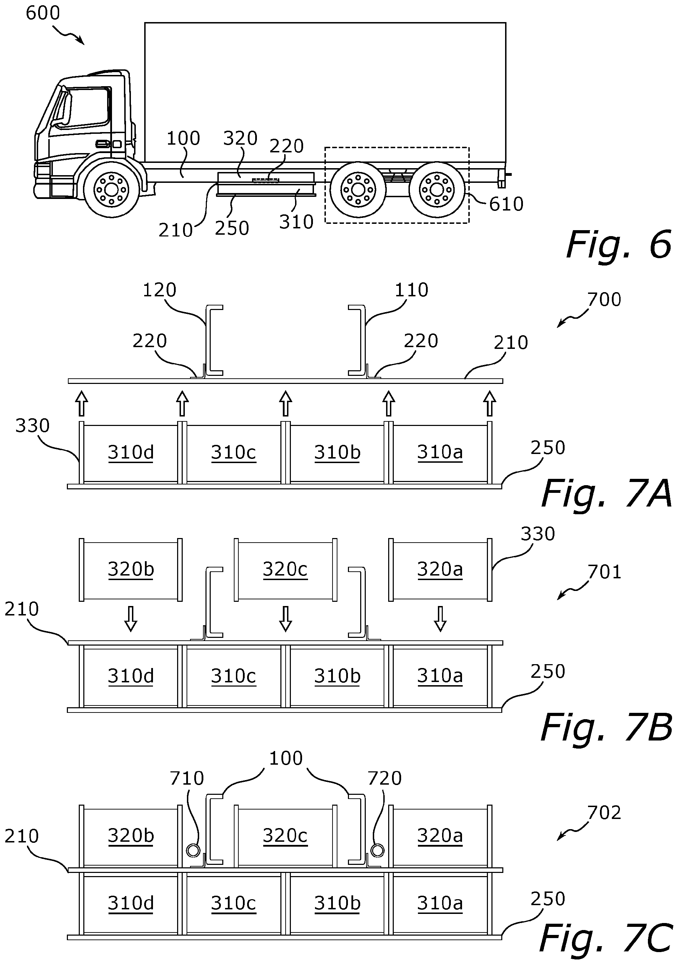

FIG. 6 schematically illustrates an example vehicle 600 as envisaged herein, here in form of a box truck (e.g. a truck with a fixed cargo-space mounted to the truck). The vehicle 600 includes the chassis frame 100, the plate 210 mounted to the chassis frame using the one or more mounting brackets 220, and the first and second battery packs 310 and 320 mounted to the bottom and top side of the plate 210, respectively, as described herein. Optionally, the vehicle 600 may also include the additional, second plate 250 mounted below the first battery packs 310. The vehicle 600 has an electric traction (e.g. including one or more electrical machines) 610 for propelling the vehicle 600. The first and second battery packs 310 and 320 are arranged to provide electrical power to the electrical traction 610.

Although illustrated in FIG. 6 as a (box) truck, a heavy-duty electric vehicle as envisaged herein may include any type of vehicle that has a chassis frame and requires mounting thereto of a plurality of battery packs. For example, the vehicle may be a construction equipment such as an excavator, dump truck, tractor, or similar, or e.g. some other form of truck such as a tow truck for a semitrailer or vehicle combination, a bus, or similar, that is or is to be electrified.

**FIGS. 7A, 7B and 7C** schematically illustrate various operations 700, 701 and 702 of an envisaged process of mounting the various battery packs to the first plate 210, in examples where the second plate 250 is also provided.

In the operation 700 as illustrated in FIG. 7A, the first battery packs 310 (such as 310a, -b, -c and -d) are first mounted to the top side of the second plate 250, using e.g. the mounting brackets 330. The second plate 250, including the first battery packs 310, is then raised towards the first plate 210, that has already been installed to the chassis frame 100 and longitudinal beams 110 and 120 thereof using the one or more mounting brackets 220. The combination of the second plate 250 and first battery packs 310 is secured to the first plate 210 by mounting the first battery packs 310 suspended from the bottom side of the plate 210. This may be preferred as the second battery packs 320 not yet being installed allows for improved access to e.g. the screws and/or bolts 332 and nuts 334 that may be used to secure the first battery packs 310 through e.g. the holes 232 of the plate 210.

In the operation 701 as illustrated in FIG. 7B, the second battery packs 320 (such as 320a, -b and -c) are then lowered on top of the plate 210, and secured to the top side of the plate 210 using e.g. the mounting brackets 330 and e.g. the screws/bolts 230 of the plate 210, the nuts 234 and the corresponding holes 338 of the mounting brackets 330 as shown earlier herein. As an alternative, it is also envisaged that e.g. the BIF battery pack 320c can be mounted to the plate 210 earlier, e.g. before the operation 700. If the space between the plate 210 and e.g. a cargo box or similar of the vehicle is limited, "lowering the second battery packs 320" to the plate 210 may include first sliding the second battery packs 320 onto the chassis frame, with the second battery packs 320 only slightly raised from the plate to clear e.g. any screws and/or bolts extending from the plate 210, and to then lower the second battery packs 320 such that they contact the plate 210.

In the operation 702, or e.g. resulting state 702, as illustrated in FIG. 7C, both the first and second battery packs 310 and 320 have thus been installed to the chassis frame 100 using the plate 210 (and second plate 250). To remove the battery packs from the vehicle again, it is envisaged that the process may be reversed, i.e. by starting with removing the BOF and optionally the BIF battery packs from the plate 210, and to the remove the first battery packs 310, i.e. the BUF battery packs, simultaneously by releasing them from the plate 210 and by lowering the second plate 250. As shown in FIG. 7C, if there is space available between e.g. the BOF battery packs 320a and 320b and the chassis frame 100, such a space may be further utilized by using such space for routing of for example one or more conductors 710 and 720, such as conductors for cooling fluid and/or electricity, or any other type of conductor/cable/conduit and similar that are required to extend along the longitudinal direction L of the chassis frame 100. It should be noted that by orienting both the first and second battery packs 310 and 320 such as illustrated in FIG: 3D, the need for such routing of cooling fluid and/or electricity may be at least partially removed.

As envisaged herein, the first and second battery packs 310 and 320 may form part of an energy storage system (ESS) of a vehicle, such as of the vehicle 600. The plate 210 (and optionally also the second plate 250) may also form part of such an ESS, or be considered to form part of the chassis frame 100 of the vehicle, or to form a separate component in between the ESS and the chassis frame 100.

In summary of all of the above, the present disclosure improves upon currently available technology in that it provides a more flexible solution/platform for mounting of a plurality of battery packs to a chassis frame of a heavy-duty vehicle, which further allows to better utilize the available space in order to increase energy storage density. This is achieved by avoiding e.g. the mounting of each battery pack individually to the chassis frame, but by instead providing a same, single platform in form of the plate 210 that is commonly shared by all of the battery packs. As the shape of the plate 210 is such that it consumes minimal space, more space is made available for the battery packs which increases energy storage density. In general, the plate is simple to fabricate, contains no or very few moving parts, and is thus easy to install and less prone to failure. The plate allows individual battery packs to be removable without first having to remove all battery packs, such as otherwise needed in case of e.g. battery pack matrices or similar, which makes both service and maintenance of the battery packs and vehicle as a whole easier. The plate 210 further allows, by enabling placement of battery packs both on top on and below of the plate 210, for an increased safety as e.g. side impacts of the vehicle are less likely to cause the battery packs being ripped off from the vehicle. This because the plate 210 and the mounting thereon of battery packs on both sides allows to place the combined center of gravity of the battery packs (in the vertical direction) closer to or at the chassis frame. As the plate 210 and the battery packs work together to increase the overall structural strength and rigidity of the solution, the plate 210 itself can be made thinner and is thus less likely to interfere with the desired flexing of the chassis frame. Other advantageous of the proposed solution are of course also possible, and it is envisaged that the skilled person would be capable of arriving at such conclusions by studying of the description, drawings and appended claims of the present disclosure.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is an exemplifying list of examples envisaged herein:
Example 1: A heavy-duty electric vehicle, including: - a chassis frame; - a plate suspended from the chassis frame using one or more mounting brackets, and - a plurality of battery packs for powering an electric traction of the vehicle, including first battery packs mounted suspended from a bottom side of the plate as well as second battery packs mounted on a top side of the plate.
Example 2: The vehicle of example 1, wherein the plate is mounted to each of a pair of longitudinal beams of the chassis frame using the one or more mounting brackets.
Example 3: The vehicle of example 2, wherein at least one of the second battery packs is mounted between the longitudinal beams.
Example 4: The vehicle of any one of examples 1 to 3, wherein at least one of the second battery packs is mounted on a first lateral side of the chassis frame and at least another one of the second battery packs is mounted on an opposite, second lateral side of the chassis frame.
Example 5: The vehicle of any one of the preceding examples, wherein the plate is made of steel and has a thickness between 5 and 25 millimeters, preferably between 10 and 15 millimeters.
Example 6: The vehicle of any one of the preceding examples, wherein at least some of the first and second battery packs are provided with brackets for mounting to the plate.
Example 7: The vehicle of any one of the preceding examples, wherein the plate is mounted at a longitudinal center of the chassis frame.
Example 8: The vehicle of any one of the preceding examples, wherein the plate is provided with cutouts at the chassis frame to account for torsional deformations of the chassis frame.
Example 9: The vehicle of example 8 depending on example 2, wherein the plate is provided with cutouts at each of the longitudinal beams at a front end of the plate and at each of the longitudinal beams at a back end of the plate.
Example 10: The vehicle of any one of the preceding examples, wherein the first and second battery packs are individually removable from the plate.
Example 11: The vehicle of any one of the preceding examples, wherein a combined center of gravity of the first and second battery packs aligns with the plate and/or chassis frame in a vertical direction of the chassis frame.
Example 12: The vehicle of any one of the preceding examples, wherein the first battery packs are provided with screws or bolts for mounting the first battery packs to the plate, and
wherein the plate includes holes for receiving the screws or bolts of the first battery packs, for guiding each of the first battery packs during said mounting the first battery packs to the plate.
Example 13: The vehicle of any one of the preceding examples, wherein the plate is provided with bolts at the top side for mounting the second battery packs to the plate, and wherein the second battery packs are provided with holes for receiving the bolts of the plate, for guiding each of the second battery packs said during mounting the second battery packs to the plate.
Example 14: The vehicle of any one of the preceding examples, wherein the first battery packs are oriented along a transverse direction of the chassis frame.
Example 15: The vehicle of any one of the preceding examples, wherein the first battery packs are oriented along a longitudinal direction of the chassis frame.
Example 16: The vehicle of any one of example 15, wherein the first and second battery packs include cooling fluid connectors on a front side in the longitudinal direction and electrical connectors on an opposite back side in the longitudinal direction, or vice versa.
Example 17: The vehicle of any one of the preceding examples, wherein the first and/or second battery packs includes multiple groups of flat packs stacked on top of each other and then mounted to the plate.
Example 18: The vehicle of any one of the preceding examples, further including one or more damping elements provided between the chassis frame and the one or more mounting brackets.
Example 19: The vehicle of any one of the preceding examples, further including one or more damping elements provided between the one or more mounting brackets and the plate.
Example 20: The vehicle of any one of the preceding examples, further including one or more damping elements provided between the plate and at least some of the first and second battery packs.
Example 21: The vehicle of any one of the preceding examples, further including an additional, second plate below the first battery packs, wherein the first battery packs are mounted to a top side of the second plate.
Example 22: A battery mounting platform for a heavy-duty electric vehicle, including the plate (210) as described herein, mountable suspended from a chassis frame of the vehicle using one or more mounting brackets.
Example 23: An energy storage system for a heavy-duty electric vehicle, including the battery mounting platform of example 22, and a plurality of battery packs for powering an electric traction of the vehicle, including first battery packs mounted to a first side (212) of the plate as well as second battery packs mounted on a second side (214) of the plate.

## Claims

1. A heavy-duty electric vehicle (600), comprising:
- a chassis frame (100);
- a plate (210) suspended from the chassis frame using one or more mounting brackets (220), and
- a plurality of battery packs (310, 320) for powering an electric traction (610) of the vehicle, comprising first battery packs (310) mounted suspended from a bottom side (212) of the plate as well as second battery packs (320) mounted on a top side (214) of the plate.

2. The vehicle of claim 1, wherein the plate is mounted to each of a pair of longitudinal beams (110, 120) of the chassis frame using the one or more mounting brackets.

3. The vehicle of claim 2, wherein at least one (320c) of the second battery packs is mounted between the longitudinal beams.

4. The vehicle of any one of claims 1 to 3, wherein at least one (320a) of the second battery packs is mounted on a first lateral side of the chassis frame and at least another one (320b) of the second battery packs is mounted on an opposite, second lateral side of the chassis frame.

5. The vehicle of any one of the preceding claims, wherein the plate is made of steel and has a thickness between 5 and 25 millimeters, preferably between 10 and 15 millimeters.

6. The vehicle of any one of the preceding claims, wherein at least some of the first and second battery packs are provided with brackets (330) for mounting the at least some battery packs to the plate.

7. The vehicle of any one of the preceding claims, wherein the plate is mounted at a longitudinal (L) center of the chassis frame.

8. The vehicle of any one of the preceding claims, wherein the plate is provided with cutouts (240) at the chassis frame to account for torsional deformations of the chassis frame.

9. The vehicle of any one of the preceding claims, wherein the first battery packs are provided with screws or bolts (332) for mounting the first battery packs to the plate, and wherein the plate comprises holes (232) for receiving the screws or bolts of the first battery packs, for guiding each of the first battery packs during said mounting the first battery packs to the plate.

10. The vehicle of any one of the preceding claims, wherein the plate is provided with bolts (230) at the top side for mounting the second battery packs to the plate, and wherein the second battery packs are provided with holes (338) for receiving the bolts of the plate, for guiding each of the second battery packs said during mounting the second battery packs to the plate.

11. The vehicle of any one of the preceding claims, wherein the first battery packs are oriented along a transverse direction (T) of the chassis frame.

12. The vehicle of any one of the preceding claims, wherein the first battery packs are oriented along a longitudinal direction (L) of the chassis frame.

13. The vehicle of any one of claim 12, wherein the first and second battery packs comprise cooling fluid connectors (370) on a front side (380) in the longitudinal direction and electrical connectors (360) on an opposite back side (382) in the longitudinal direction, or vice versa.

14. The vehicle of any one of the preceding claims, wherein the first and/or second battery packs comprises multiple groups of flat packs (312, 322) stacked on top of each other and then mounted to the plate.

15. The vehicle of any one of the preceding claims, further comprising an additional, second plate (250) below the first battery packs, wherein the first battery packs are mounted to a top side of the second plate.
